(19) **Europäisches Patentamt / European Patent Office / Office européen des brevets**

(11) **EP 2 092 750 B1**

(12) ## EUROPÄISCHE PATENTSCHRIFT

(45) Veröffentlichungstag und Bekanntmachung des Hinweises auf die Patenterteilung:
**07.07.2010  Patentblatt 2010/27**

(21) Anmeldenummer: **08701019.5**

(22) Anmeldetag: **08.01.2008**

(51) Int Cl.:
**H04N 7/26** (2006.01)          **H04N 7/58** (2006.01)

(86) Internationale Anmeldenummer:
**PCT/EP2008/000080**

(87) Internationale Veröffentlichungsnummer:
**WO 2008/083948 (17.07.2008 Gazette 2008/29)**

(54) **KONZEPT ZUM ENCODIEREN EINER MEHRZAHL VON INFORMATIONSSIGNALEN FÜR EINE GEMEINSAME ÜBERTRAGUNG IN EINEM ZEITMULTIPLEX**

DESIGN FOR ENCODING A PLURALITY OF INFORMATION SIGNALS FOR A COMMON TRANSMISSION IN A TIME-DIVISION MULTIPLEX

CONCEPT PERMETTANT DE CODER UNE PLURALITÉ DE SIGNAUX D'INFORMATION POUR UNE TRANSMISSION COMMUNE DANS UN MULTIPLEXAGE À RÉPARTITION DANS LE TEMPS

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **09.01.2007   DE 102007001379**

(43) Veröffentlichungstag der Anmeldung:
**26.08.2009   Patentblatt 2009/35**

(73) Patentinhaber: **Fraunhofer-Gesellschaft zur Förderung der angewandten Forschung e.V.
80686 München (DE)**

(72) Erfinder:
• **WIEGAND, Thomas
  10719 Berlin (DE)**
• **HINZ, Tobias
  16244 Schorfheide OT Lichterfelde (DE)**
• **SÜHRING, Karsten
  10247 Berlin (DE)**

• **GUETHER, Jens
  14163 Berlin (DE)**
• **SELINGER, Thorsten
  10559 Berlin (DE)**

(74) Vertreter: **Schenk, Markus et al
Schoppe, Zimmermann, Stöckeler & Zinkler
Patentanwälte
Postfach 246
82043 Pullach bei München (DE)**

(56) Entgegenhaltungen:
EP-A- 0 888 009          EP-A- 1 071 234
WO-A-2006/099695    US-A1- 2006 224 762
US-B1- 6 195 388

• VAN BEEK P ET AL: "Adaptive streaming of high-quality video over wireless LANs" PROCEEDINGS OF THE SPIE, SPIE, BELLINGHAM, VA, Bd. 5308, Nr. 1, 20. Januar 2004 (2004-01-20), Seiten 647-660, XP002312522 ISSN: 0277-786X

**Beschreibung**

Die vorliegende Erfindung bezieht sich auf ein Konzept zum Encodieren einer Mehrzahl von Informationssignalen für eine gemeinsame Übertragung in einem Zeitmultiplex, wie es insbesondere bei der Übertragung von codierten Videosignalen in einem digitalen Rundfunksystem, wie beispielsweise in einem DVB-H-System, eingesetzt werden kann.

Bei dem DVB-H-System (DVB-H = Digital Video Broadcasting - Handhelds, Digitaler Videorundfunk für Handgeräte) können in einem Transportstrom über einen Kanal mit konstanter Bitrate mehrere Multimediadienste, insbesondere digitale Videosignale, im Zeitmultiplex übertragen werden. Wird dabei jedem Videosignal entsprechend einem encodierten Informationssignal eine feste Bitrate zugewiesen, so ist beispielsweise ein Programmanbieter zu einem Kompromiss zwischen kostspieliger Übertragungskapazität und bei kritischen Szenen erreichbarer Bildqualität gezwungen. Gelegentlich reicht dabei eine Daten- bzw. Komprimierungsrate nicht aus, und es kann bei detailreichen Szenen zu Qualitätseinbußen kommen. Anforderungen an die Datenrate verteilen sich jedoch statistisch über die Zeit und über die verschiedenen über denselben Kanal übertragenen Programme.

Abhängig von Bildinhalt benötigt ein Video-Encoder unterschiedliche hohe Datenraten, um beispielsweise eine Fernsehübertragung mit guter Qualität zu gewährleisten. So erfordert eine Sportübertragung aufgrund bewegungsintensiver Bildinhalte typischerweise eine höhere Datenrate als beispielsweise eine Talkshow mit eher statischen Bildinhalten. Besonders hohe Datenraten werden für eine Übertragung detailreicher Szenen mit viel Bewegung benötigt. Videocodierungsverfahren basieren in weiten Teilen auf Prädiktionen. Das heißt, es werden Ähnlichkeiten innerhalb eines Bildes (Intra) und zwischen den Bildern (Inter) zur Vorhersage ausgenutzt. Diese Prädiktionen funktionieren je nach Bildinhalt unterschiedlich gut. Daher wird für unterschiedliche Szenen bei gleicher Bildqualität eine unterschiedliche Komprimierungsrate zur Codierung benötigt.

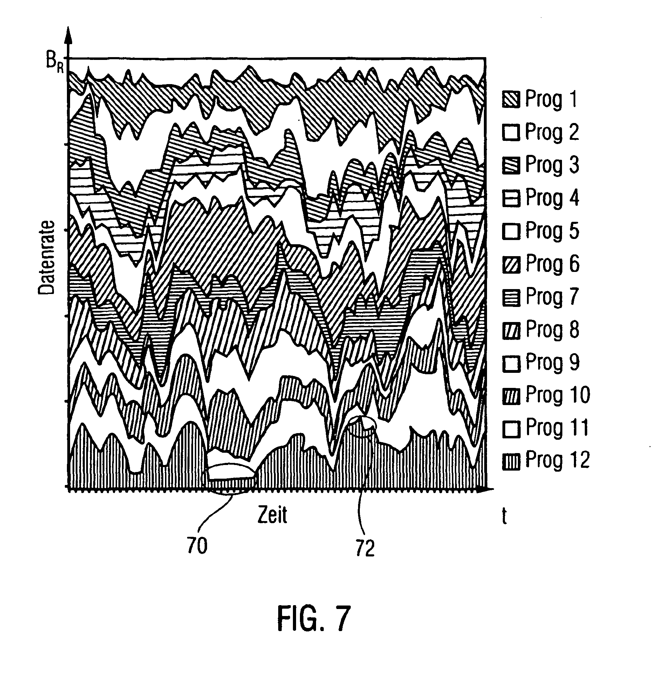

Je größer eine Programmanzahl, desto unwahrscheinlicher ist es, dass alle Programme gleichzeitig eine sehr hohe Datenrate benötigen. Werden in einem Transportstrom über einen Kanal mit konstanter Gesamtdatenrate mehrere Informationssignale, insbesondere Videos, übertragen, kann man dieses Unterschiede ausnutzen. Anstatt jedem Video eine feste Bitrate zuzuteilen, analysiert ein statistischer Multiplex Inhalte des zu übertragenden Bildmaterials und weist der Mehrzahl von Informationssignalen für eine gemeinsame Übertragung in dem Transportstrom über den Kanal mit konstanter Gesamtdatenrate unterschiedliche Datenraten je nach Prädiktionseigenschaften zu. Anstatt jedem Video eine maximal nötige Bitrate zuzuweisen, kann man so mit einer deutlich geringeren mittleren Bitrate pro Video arbeiten, ohne dabei die wahrgenommene Bildqualität zu mindern. Eine Gesamtqualitätsstörung kann dadurch also gemindert werden. Dieser Zusammenhang ist schematisch in Fig. 7 dargestellt.

Fig. 7 zeigt eine dynamische Bitratenzuteilung für eine Mehrzahl von Informationssignalen zur Minderung einer Gesamtqualitätsstörung, so dass eine insgesamt zur Verfügung stehende Datenrate $B_R$ eines Transportstroms nicht überschritten wird. Der mit dem Bezugszeichen 70 gekennzeichnete Bereich beschreibt exemplarisch einen Bereich, in dem einem Encoder für ein erstes Informationssignal bzw. Programm durch den statistischen Multiplex eine vergleichsweise geringe Datenrate zur Verfügung gestellt wird. Das heißt, in dem Bereich 70 wird eine Prädiktion aufgrund relativ statischer Bildinhalte gut funktionieren und das erste Informationssignal kann mit einer geringen Datenrate encodiert werden. In dem mit Bezugszeichen 72 gekennzeichneten Bereich wird dem Encoder für das erste Informationssignal eine relativ hohe Datenrate zugewiesen, was darauf zurückzuführen ist, dass Inter- und Intra-Bildprädiktionen aufgrund viel Bewegung in Einzelbildern weniger gut funktionieren und daher eine höhere Codierungsrate erforderlich ist.

Je mehr Videos bzw. Informationssignale gemeinsam übertragen werden, desto höher ist die Wahrscheinlichkeit, dass die jeweiligen Inhalte verschiedene Eigenschaften haben. Bei 16 Fernsehkanälen lassen sich dadurch beispielsweise bis zu 40% Bitrate einsparen.

Ein Empfang von Videos bzw. Informationssignalen auf einem mobilen Endgerät darf natürlich nicht dazu führen, dass dessen Batterie in kürzester Zeit entladen wird. Bei DVB-T-Systemen (DVB-T = Digital Video Broadcasting - Terrestrial) muss stets ein gesamter Datenstrom decodiert werden, bevor ein Zugriff auf einen der in dem Datenstrom enthaltenen Dienste, wie beispielsweise Fernsehprogramme, im Multiplex geschehen kann. Bei DVB-H bedient man sich der so genannten "Time-Slicing"-Technik, bei der nur ein Teil bzw. ein Zeitschlitz des Datenstroms empfangen wird, der Daten eines gerade ausgewählten Services oder Programms beinhaltet. Damit ein solcher Ansatz funktionieren kann, muss der Datenstrom im Vergleich zu DVB-T jedoch in einer geeigneten Weise umstrukturiert werden.

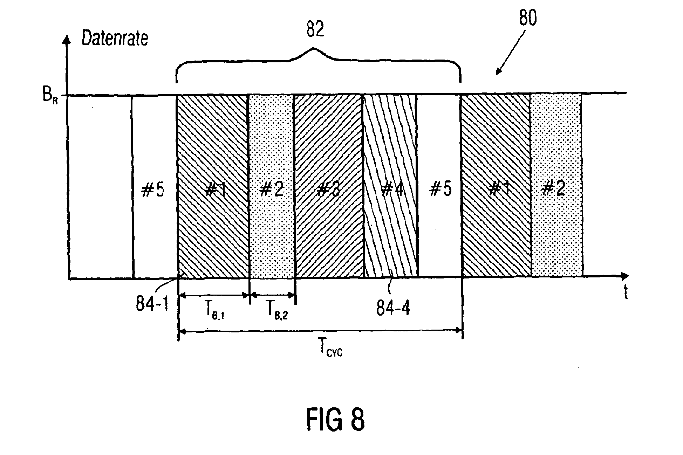

Das Zusammenfügen bzw. Multiplexing verschiedener Dienste erfolgt bei DVB-H im reinen Zeitmultiplex, bei dem Informationssignale jedes Dienstes periodisch in komprimierten Datenpaketen bzw. Bursts gesendet werden. Ein einzelner Dienst wird also nicht kontinuierlich ausgestrahlt, sondern lediglich zeitweise mit einer entsprechend hohen Datenrate und zwischenzeitlich überhaupt nicht. Das zeitliche Multiplexen mehrerer Dienste ergibt wieder einen kontinuierlichen Datenstrom konstanter Bitrate $B_R$, wie es beispielhaft in Fig. 8 gezeigt ist.

Fig. 8 zeigt einen kontinuierlichen Datenstrom 80 mit konstanter mittlerer Datenrate $B_R$. Der Datenstrom 80 ist unterteilt in Zeitrahmen 82 der Dauer $T_{CYC}$. Ein Zeitrahmen 82 umfasst eine Mehrzahl von Zeitschlitzen bzw. Bursts 84-n der Dauer $T_{B,n}$ (n=1,...,N), wobei jeder Burst 84-n einem von N Informationssignalen bzw. Services zugeordnet werden kann. Die Dauer $T_{B,n}$ eines Bursts hängt im Allgemeinen von der Größe der Datenpakete des jeweiligen Services pro Zeitrahmen 82 ab. Erfordert beispielsweise ein Videosignal innerhalb des Zeitrahmens $T_{CYC}$ eine vergleichsweise hohe Datenrate, so wird der dem Videosignal zuordenbare Burst eine große Burstdauer aufweisen.

Zwischen den Burstdauern $T_{B,n}$ (n=1,...,N) von N gemeinsam zu übertragenden Informationssignalen und der Dauer $T_{CYC}$ des Zeitrahmens 82 besteht im Allgemeinen folgender Zusammenhang:

$$T_{CYC} = \sum_{n=1}^{N} T_{B,n} \qquad\qquad (1)$$

Der kontinuierliche Datenstrom 80 kann von Empfängern zeitselektiv empfangen werden, wenn die Lage des Bursts des ausgewählten Dienstes bekannt ist. Beim Einschalten muss ein Empfänger noch einige Sekunden lang den gesamten Datenstrom 80 auswerten. Nach der Auswahl eines n-ten der N Dienste wird dagegen nur noch der zu dem n-ten Dienst gehörige Burst empfangen und der Empfangsteil sonst abgeschaltet. D.h. pro Zeitrahmen $T_{CYC}$ ist der Empfänger für eine Dauer von ca. ($T_{CYC} - T_{B,n}$) ausgeschaltet.

Im Empfänger werden eingehende Bursts gepuffert und dann mit konstanter Rate (der mittleren Daten- bzw. Codierungsrate des jeweiligen Dienstes) ausgelesen. Die Dauer $T_{B,n}$ der Bursts 84-n (n=1,...,N) liegt typischerweise in einem Bereich einiger 100 ms, wohingegen die Abschaltzeit dagegen viele Sekunden betragen kann. Je nach Verhältnis von An-/Auszeit kann sich eine Leistungsersparnis von mehr als 90% ergeben. Time-Slicing setzt dazu eine ausreichende Anzahl N von Diensten bzw. Informationssignalen voraus, um effektiv zu sein. Die Ersparnis hängt von mehreren Parametern ab, wie z.B. der verfügbaren gesamten Datenrate $B_R$, einer mittleren Datenrate $d_n$ des einzelnen Dienstes, der zulässigen Größe eines Bursts usw.

In einem DVB-H-System werden Informationssignale bzw. Services auf Basis des Internetprotokolls (IP) übertragen. Dieser Ansatz ermöglich eine einfache Verknüpfung mit anderen Netzwerken. Ein MPEG-2-Transportstrom (MPEG = Moving Picture Experts Group) dient als physikalischer Träger. Eine Einbettung von IP-Daten in den Transportstrom geschieht mit Hilfe eines bestehenden Anpassungsprotokolls, der sog. Multi Protokoll Kapselung bzw. Multi Protocol Encapsulation (MPE). Um den Transportstrom vor störenden Einwirkungen eines Funkkanals zu schützen, wird in DVB-H auf einen Fehlerschutz (MPE-FEC) zurückgegriffen, welcher auf der Ebene des IP-Datenstroms angewendet wird, bevor die IP-Daten per MPE eingekapselt werden. Durch diesen Mechanismus soll die Empfangsleistung generell verbessert werden, insbesondere die Zuverlässigkeit beim mobilen Empfang und bei starken impulsförmigen Störungen.

MPE-FEC ist in direkter Nachbarschaft zum Time-Slicing und zur MPE angesiedelt. Diese drei Techniken sind unmittelbar aufeinander abgestimmt und bilden zusammen den so genannten DVB-H-Codec. IP-Datenströme aus den verschiedenen Quellen werden als einzelne Elementarströme nach der Timeslicing Methode gemultiplext. Der Fehlerschutz MPE-FEC wird getrennt für jeden einzelnen Elementarstrom berechnet und zugefügt. Danach erfolgt die Einkapselung der IP-Pakete in die so genannten Sections der Multi Protocol Encapsulation und daraufhin die Einbettung in den Transportstrom.

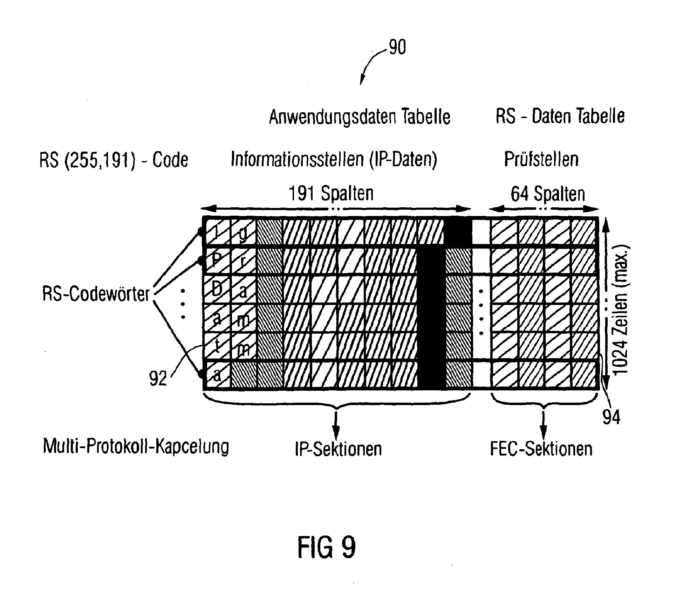

Im Einzelnen besteht der Fehlerschutz aus einem Reed-Solomon-Code in Verbindung mit einem umfangreichen Block-Interleaving. MPE-FEC stellt für die Eingangsdaten des DVB-H-Codecs eine eigene Rahmenstruktur, den sog. FEC-Frame, bereit, der eine Größe von maximal 1024 Zeilen und 255 Spalten hat, wie es in Fig. 9 dargestellt ist.

Fig. 9 zeigt einen FEC-Frame bzw. FEC-Rahmen 90. Jede Zelle des Rahmens 90 entspricht einem Byte. Der Rahmen 90 ist in zwei Teile, 92, 94 gegliedert. Der linke Teil 92 mit 191 Spalten wird als Anwendungsdaten-Tabelle bzw. Application Data Table (ADT) bezeichnet. Die ADT 92 wird mit eingehenden IP-Paketen (Datagrammen) des zu schützenden Dienstes bzw. Informationssignals gefüllt. Der rechte Teil 94 mit 64 Spalten wird als Reed-Solomon-Daten-Tabelle (RDT) bezeichnet. Die RDT 94 enthält nach der Codierung die Prüfstellen (für die Bytes) des Reed-Solomon-Codes. Wenn die Reed-Solomon-Codierung erfolgt ist, werden die IP-Pakete aus der ADT 92 ausgelesen und regulär nach der MPE-Methode in IP-Sections eingekapselt übertragen, gefolgt von der Redundanzinformation der Prüfstellen, die spaltenweise aus der RDT 94 ausgelesen und in separaten FEC-Sections übertragen werden.

Der Fehlerschutz ist eng mit dem Time-Slicing verknüpft. Beide arbeiten elemtarstromweise, und die Größe bzw. Datenmenge eines einzelnen Time-Slices bzw. Bursts entspricht genau dem Inhalt eines FEC-Frames 90.

Wie bereits anhand von Fig. 7 beschrieben wurde, ist die Aufgabe eines statistischen Multiplexers mehrere parallel anliegende Eingangssignale bzw. Informationssignale zu einem gemeinsamen in der Datenübertragungsrate $B_R$ begrenzten Ausgangssignal zusammenzufassen, wobei typischerweise die Summe der Datenübertragungsraten $d_{R,n}$ (n=1,...,N) aller Eingangssignale die Datenübertragungsratenbegrenzung $B_R$ des Ausgangssignals übersteigt. Dazu bewertet der statistische Multiplexer die Informationssignale direkt, oder anhand bereitgestellter Zusatzinformationen mit Hilfe gegebener Kriterien und leitet daraus Begrenzungen der Datenübertragungsraten $d_{R,n}$ (n=1,...,N) für die einzelnen Informationssignale ab, so dass die gemeinsame Datenübertragungsrate $B_R$ am Ausgang des Multiplexers eingehalten werden kann und das Ausgangssignal eine maximale "Gesamtqualität" erreicht.

Durch die Datenrate $B_R$ des Datenstroms 80 und die Dauer $T_{CYC}$ des Zeitrahmens 82 ist eine in dem Zeitrahmen 82 übertragbare Übertragungsmenge $D = B_R * T_{CYC}$ vorgegeben. Betrachtet man nun die mittlere Gesamtdatenübertragungsrate $B_R$ aller eingehenden Informationssignale in dem Zeitintervall $T_{CYC}$, so ist diese Schwankungen unterworfen. Diese Schwankungen können beispielsweise dazu führen, dass ein IP-Datenpaket des N-ten Dienstes bzw. Informationssignals nicht von dem dazugehörigen zeitlich letzten bzw. N-ten Burst 84-N des Übertragungsrahmens 82 aufgenommen werden kann. In einem solchen Fall hat der statische Multiplex lediglich die Option, Eingangspakete zu verwerfen oder abzuschneiden, wobei beide Optionen Qualitätseinbußen für die betroffen an einem Empfänger anschließend decodierten Informationssignale nach sich ziehen, die unter Umständen erheblich sind.

Wünschenswert wäre dagegen eine Übertragung sämtlicher in einem Zeitrahmen $T_{CYC}$ eingehender Datenpakte von Informationssignalen.

Die Aufgabe der vorliegenden Erfindung besteht somit darin, eine verbesserte gemeinsame Übertragung einer Mehrzahl von Informationssignalen in einem Zeitmultiplex in einem Zeitrahmen zu ermöglichen.

Diese Aufgabe wird durch eine Vorrichtung mit den Merkmalen des Patentanspruchs 1, ein Verfahren gemäß Patentanspruch 11 und ein Computerprogramm gemäß Patentanspruch 12 gelöst. Gemäß einem Aspekt schafft die vorliegende Erfindung eine Vorrichtung zum Encodieren einer Mehrzahl von Informationssignalen für eine gemeinsame Übertragung in einem Zeitmultiplex in einem Zeitrahmen und mit einer Übertragungsrate, mit einer Einrichtung zum Einstellen einer Komprimierungsrate für jedes Informationssignal zur Minderung einer Gesamtqualitätsstörung pro Zeitrahmen, so dass pro Zeitrahmen eine aus dem Zeitrahmen und der Übertragungsrate vorgegebene Übertragungsmenge nicht überschritten wird.

Die Erkenntnis der vorliegenden Erfindung besteht darin, dass durch eine Einführung eines Budgets an übertragbaren Bits für ein gegebenes Zeitintervall, das dem Zeitrahmen entspricht, eine vorgegebene Datenpaketgröße an einem Sender exakt eingehalten werden kann. Das Budget an übertragbaren Bits tritt also an die Stelle der mittleren Gesamtdatenübertragungsrate. Somit kann sichergestellt werden, dass exakt das Budget an übertragbaren Bits pro Zeitrahmen übertragen wird und keine Daten aufgrund von Schwankungen der mittleren Gesamtdatenübertragungsrate verworfen werden müssen.

Gemäß Ausführungsbeispielen sammelt dazu ein statistischer Multiplexer Analysedaten für jedes einer Mehrzahl von Informationssignalen für das vorgegebene Zeitintervall bzw. den Zeitrahmen. Durch eine Analyse eines Informationssignals bzw. eines Eingangssignals eines Encoders, kann eine Qualität des decodierten Signals und eine Größe der Datenpakete pro Zeitrahmen vor der eigentlichen Encodierung abgeschätzt werden.

Ferner werden gemäß Ausführungsbeispielen die Analysedaten der Mehrzahl von Encodern für die Mehrzahl von Informationssignalen und das verfügbare Budget an übertragbaren Bits für den Zeitrahmen dem statistischen Multiplex zugeführt. Der statistische Multiplex bestimmt anhand der Informationssignale und der Analysedaten eine optimale Verteilung einzelner Bitbudgets für die Mehrzahl von Encodern für die Mehrzahl von Informationssignalen, so dass für eine analysierte Gruppe von Bildern (GoP = Group of Pictures) in dem Zeitrahmen alle Encoder eine maximale Gesamtbildqualität erzeugen. Die ermittelten einzelnen Bitbudgets werden gemäß Ausführungsbeispielen an die Encoder gesendet und zur Encodierung der analysierten Gruppe von Bildern pro Zeitrahmen verwendet, wobei jeder einzelne Encoder innerhalb des Zeitrahmens frei über das ihm zugeteilte Bitbudget verfügen kann.

Gemäß einem Aspekt der vorliegenden Erfindung wird die Komprimierungsrate für jedes Informationssignal derart eingestellt, dass pro Zeitrahmen $T_{CYC}$ eine aus den eingestellten Komprimierungsraten resultierende Übertragungsmenge genau der aus dem Zeitrahmen $T_{CYC}$ und der Übertragungsrate $B_R$ vorgegebene Übertragungsmenge D übertragen werden kann.

Ein Vorteil dieses Aspekts der vorliegenden Erfindung besteht darin, dass die Bandbreiten der Informationssignale bzw. der Eingangssignale des statistischen Multiplexers durch Steuerung der angeschlossenen Encoder bereits bei deren Generierung derart begrenzt werden können, dass das vorgegebene Gesamtbudget an Bits D für das gegebene Zeitintervall $T_{CYC}$ eingehalten werden kann. Dadurch gehen durch den statistischen Multiplex keine Datenpakte verloren und der Datendurchsatz des statistischen Multiplexers beträgt vorzugsweise 100%.

Bevorzugte Ausführungsbeispiele der vorliegenden Erfindung werden nachfolgend Bezug nehmend auf die beiliegenden Zeichnungen näher erläutert. Es zeigen:

Fig. 1    ein schematisches Blockschaltbild einer Vorrich- tung zum Encodieren einer Mehrzahl von Informati- onssignalen für eine gemeinsame Übertragung, ge- mäß einem Ausführungsbeispiel der vorliegenden Erfindung;

Fig. 2    eine schematische Darstellung einer schrittweisen Verarbeitung einer Gruppe von Bildern, gemäß ei- nem Ausführungsbeispiel der vorliegenden Erfin- dung;

Fig. 3    eine schematische Darstellung einer Bitratenzu- teilung auf verschiedene Gruppen von Bildern, ge- mäß einem Ausführungsbeispiel der vorliegenden Erfindung;

Fig. 4    eine schematische Darstellung einer Einfügung von Service-Paketen in Zeitschlitze gemäß einem Aus- führungsbeispiel der vorliegenden Erfindung;

Fig. 5    eine schematische Darstellung einer Zuordnung von zwei Informationssignalen auf einen Zeitschlitz, gemäß einem Ausführungsbeispiel der vorliegenden Erfindung;

Fig. 6    eine schematische Darstellung eines erfindungsge- mäßen Systems;

Fig. 7    eine schematische Darstellung einer dynamischen Zuweisung von Datenraten zu verschiedenen Pro- grammen aufgrund deren Inhalte;

Fig. 8    eine schematische Darstellung des Time-Slicing- Konzepts bei DVB-H; und

Fig. 9    eine schematische Darstellung einer MPE-FEC- Rahmenstruktur.

Bezüglich der nachfolgenden Beschreibung sollte beachtet werden, das bei den unterschiedlichen Ausführungsbeispielen gleich oder gleich wirkende Funktionselemente gleiche Bezugszeichen aufweisen und somit die Beschreibungen dieser Funktionselemente in den verschiedenen nachfolgend dargestellten Ausführungsbeispielen untereinander austauschbar sind.

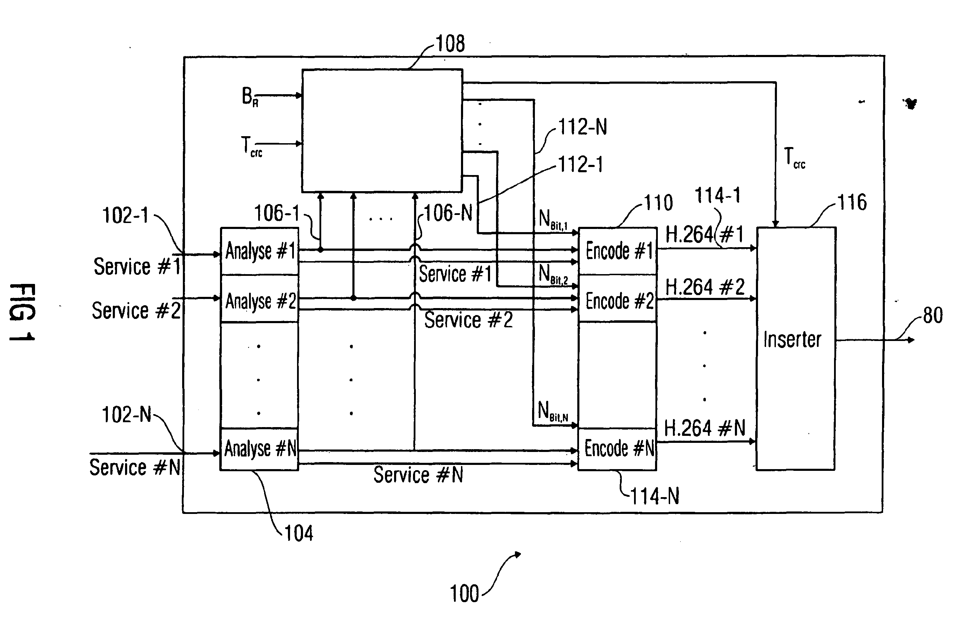

Fig. 1 zeigt eine Vorrichtung 100 zum Encodieren einer Mehrzahl von N Informationssignalen 102-1 bis 102-N für eine gemeinsame Übertragung ein einem Zeitmultiplex in einem Zeitrahmen der Dauer $T_{CYC}$ und mit einer Übertragungsrate $B_R$, gemäß einem Ausführungsbeispiel der vorliegenden Erfindung.

Die Vorrichtung 100 weist eine Einrichtung 104 zum Analysieren der N Informationssignale 102-1 bis 102-N auf. Die Einrichtung 104 zum Analysieren ist über N Analyseergebnissignale 106-1 bis 106-N mit einer Einrichtung 108 zum Einstellen einer Komprimierungsrate für jedes der Informationssignale 102-1 bis 102-N zur Minderung einer Gesamtsignalstörung pro Zeitrahmen $T_{CYC}$ gekoppelt. Eine Encodiereinrichtung 110 zum Encodieren der Mehrzahl der Informationssignale 102-1 bis 102-N ist über Ausgangssignale 112-1 bis 112-N mit der Einrichtung 108 zum Einstellen der Komprimierungsrate gekoppelt. Ferner sind die Encoder 110-1 bis 110-N über die Analyseergebnissignale 106-1 bis 106-N mit der Einrichtung 104 zum Analysieren verbunden. An ihrem Ausgang liefern die Encoder 110-1 bis 110-N komprimierte, paketorientierte Signale 114-1 bis 114-N, welche in eine Einrichtung 116 geführt werden, um ein Datenpaket 114-n (n=1,...,N) eines encodierten Informationssignals 102-n entsprechend dem Zeitrahmen $T_{CYC}$ zu einem Zeitschlitz 84-n innerhalb des Zeitrahmens $T_{CYC}$ zuzuordnen.

Durch eine Analyse jedes der N Informationssignale 102-1 bis 102-N kann eine Qualität eines jeweils später decodierten Signals und eine Größe von Datenpaketen pro Zeitrahmen vor der eigentlichen Encodierung durch die Encoder 110-1 bis 110-N abgeschätzt werden. Dabei wird die Analyse ebenfalls zur Unterstützung der Encoder 110-n (n=1,...,N) eingesetzt, wobei gewonnene Informationen aus der Analyse den Encodern 110-1 bis 110-N in Form der Signale 106-1 bis 106-N als Seiteninformation zur Verfügung gestellt werden können.

Gemäß Ausführungsbeispielen wird die Analyse der unkomprimierten Eingangssignale 102-1 bis 102-N jeweils auf Gruppen von Bildern (GoP's) durchgeführt. Die zeitliche Ausdehnung der Gruppen von Bildern entspricht dem Zeitrahmen $T_{CYC}$. Dabei ist zu erwähnen, dass eine Anzahl von Bildern einer GoP für die verschiedenen Eingangssignale 102-1 bis 102-N variieren kann. Die Analyse kann gemäß Ausführungsbeispiel beispielsweise auf einer Schätzung von Bewegungsparametern und einer anschließenden Bewegungskompensation basieren. Dabei werden mittels geschätzter Bewegungsvektoren prädizierte Bilder mit Originalbildern verglichen. Aufgrund dieses Vergleichs und den darauf basierenden Analyseergebnisdaten 106-1 bis 106-N kann anschließend eine optimale Verteilung von einzelnen Bitbudgets $N_{ait,1}$ bis $N_{Bit,N}$ für die GoP's der Informationssignale 102-1 bis 102-N pro Zeitrahmen $T_{CYC}$ bestimmt werden, so dass für die analysierten GoP's in dem Zeitrahmen $T_{CYC}$ sämtliche Encoder 110-n (n=1,...,N) eine maximale Gesamtbildqualität erzeugen, d.h. eine Gesamtqualitätsstörung pro Zeitrahmen gemindert wird.

Dazu ist die Einrichtung 104 zum Analysieren der Mehrzahl der Informationssignale 102 pro Zeitrahmen $T_{CYC}$ gemäß Ausführungsbeispielen ausgebildet, um, basierend auf der Analyse, eine Kompressionsrate $d_{R,n}$ für jedes Informationssignal derart einstellen zu können, dass pro Zeitrahmen $T_{CYC}$ eine aus dem Zeitrahmen und der Übertragungsrate $B_R$ vorgegebene Übertragungsmenge $D = B_R * T_{CYC}$ nicht überschritten wird.

Die Bestimmung der einzelnen Bitbudgets $N_{Bit,1}$ bis $N_{Bit,N}$ bzw. 112-1 bis 112-N übernimmt gemäß Ausführungsbeispielen der vorliegenden Erfindung die Einrichtung 108 zum Einstellen der Komprimierungsrate für jedes Informationssignal. Dazu wird der Einrichtung 108 Information über eine mittlere Gesamtdatenrate $B_R$ des MPEG2-Transportstroms 80 und Information über die Dauer $T_{CYC}$ des Zeitrahmens, in dem N Bursts bzw. Zeitschlitze entsprechend den N encodierten GoPs übertragen werden, zur Verfügung gestellt.

Die errechneten Bitbudgets $N_{Bit,1}$ bis $N_{Bit,N}$ bzw. 112-1 bis 112-N werden dann an die Encoder 110-n (n=1,..., N) übermittelt und zur Codierung der vorher analysierten GoPs verwendet, wobei jeder einzelne der N Encoder innerhalb des Zeitrahmens $T_{CYC}$ frei über sein zugeteiltes Bitbudget $N_{Bit,n}$ verfügen kann.

Gemäß einem Ausführungsbeispiel der vorliegenden Erfindung ist die Einrichtung 108 zum Einstellen ausgebildet, um die Komprimierungsraten $N_{Bit,n}$ (n=1,...,N) derart einzustellen, dass pro Zeitrahmen eine aus den eingestellten Komprimierungsraten $N_{Bit,n}$ resultierende Übertragungsmenge genau der aus dem Zeitrahmen $T_{CYC}$ und der Übertragungsrate $B_R$ vorgegebene Übertragungsmenge $D = B_R * T_{CYC}$ entspricht.

Gemäß Ausführungsbeispielen weist die Vorrichtung 100 pro Informationssignal 102-n (n=1,...,N) einen Encoder 110-n (n=1,...,N) auf, um ein jeweiliges Informationssignal 102-n innerhalb jedes Zeitrahmens $T_{CYC}$ mit der jeweils eingestellten Komprimierungsrate $d_{R,n}$ (n=1,...,N) zu encodieren. Die Encoder 110-n (n=1,...,N) erzeugen aus den unkomprimierten Eingangssignalen 102-1 bis 102-N N komprimierte Datenströme 114-1 bis 114-N. Die Encoder 110-n (n=1,...,N) sind gemäß Ausführungsbeispielen also ausgebildet, um die Encodierung abschnittsweise in Datenpakete vorzunehmen, derart, dass Zeitrahmengrenzen auf Abschnittsgrenzen fallen. Die komprimierten Datenströme sind paketorientiert und werden vorzugsweise paketorientiert weiterverarbeitet. Die von einem Encoder erzeugten Datenpakete können in Größe und zeitlichem Abstand erheblich voneinander abweichen.

Encoder, insbesondere Video-Encoder, werden hauptsächlich in zwei Modi betrieben: im Constant-Bitrate- (CBR-) und im Variable-Bitrate- (VBR-) Modus.

Im CBR-Modus erzeugt ein Encoder am Ausgang einen Datenstrom mit einer konstanten mittleren Bitrate $d_n$ (n=1,...,N). Der Nachteil dieses Verfahrens ist, dass eine Qualität eines später decodierten Signals stark schwankt. Im VBR-Modus hingegen erzeugt der Encoder einen Bitstrom, dessen Datenrate $d_n$ (n=1,...,N) starken Schwankungen unterworfen ist, bei dem jedoch die Qualität des decodierten Signals nahezu konstant ist.

Ein H.264/AVC Video-Encoder (AVC = Advanced Video Coding) empfängt ein unkomprimiertes Videosignal (z.B. Videocapture, IP-Datenstrom) und encodiert dieses mittels des H.264/AVC Videostandards in Datenpakete. Ein Video-Encoder 110-n (n=1,...,N) arbeitet in dem hier dargestellten erfindungsgemäßen Konzept über kurze Zeitabstände entsprechend dem Zeitrahmen $T_{CYC}$, im CBR-Modus. Da die einem Informationssignal zugewiesene Datenrate jedoch insgesamt schwankt, d.h. über mehrere aufeinanderfolgende Zeitrahmen, weist das statistische Multiplexverfahren eine VBR-Charakteristik auf.

Ein HE-AAC Audioencoder (nicht gezeigt) (HE-AAC = High Efficiency Advanced Audio Coding) empfängt ein unkomprimiertes Audiosignal (z.B. Audiocapture, IP-Datenstrom) und codiert dieses mittels des HE-AAC-Audiocodierverfahrens in Datenpakete. Der HE-AAC-Encoder arbeitet im CBR-Modus. Die Datenrate wird nicht durch den statistischen Multiplex geregelt.

Die komprimierten Audio- und Videopakete werden von einem den Encodern 110-n (n=1,...,N) nachgeschalteten Modul (nicht gezeigt) synchronisiert, in RTP-Pakete (RTP = Real-Time Transport Protocol) verpackt und beispielsweise per Internet an die Einrichtung 116 zum Zuordnen bzw. den Daten-Inserter 116 oder IP-Inserter 116 weitergeleitet, welcher ausgebildet ist, um, basierend auf einer Zuordnungsinformation, die einem Zeitrahmen $T_{CYC}$ zuordenbaren encodierten Datenpakete 114-n eines Informationssignals einem dem Zeitrahmen $T_{CYC}$ zuordenbaren Burst 84 zuzuordnen.

Gemäß Ausführungsbeispielen wird die Zuordnungsinformation, basierend auf welcher die Datenpakete einer GoP einem der Zeitrahmen zuordenbar sind, von der Einrichtung 108 bereitgestellt, wobei die Zuordnungsinformation einen Zeitstempel eines zeitlich ersten Datenpakets pro Zeitrahmen und einen Zeitstempel eines zeitlich letzten Datenpakets pro Zeitrahmen aufweist.

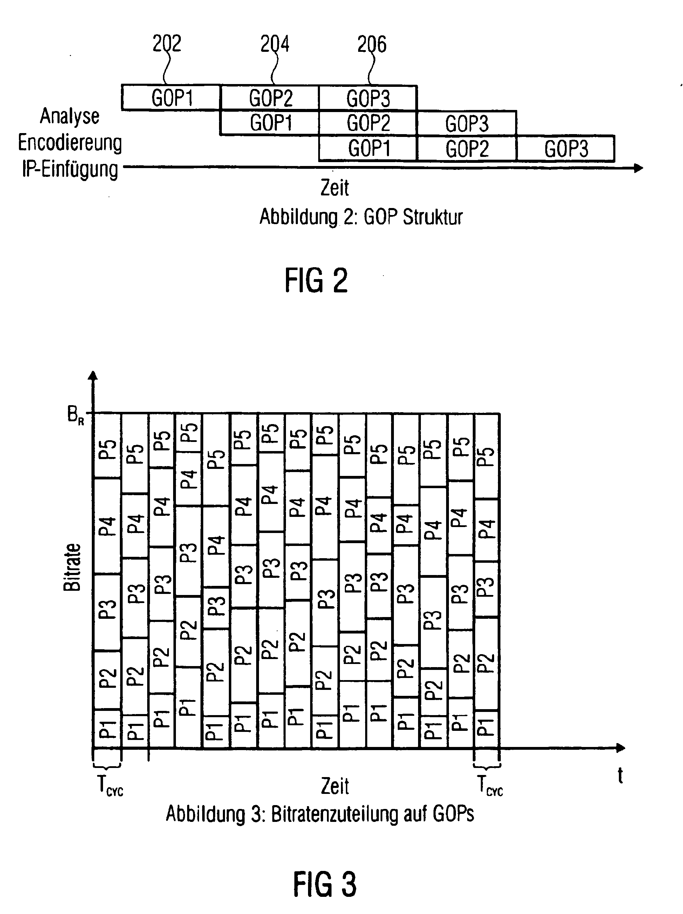

Die Bearbeitung einer Gruppe von Bildern pro Zeitrahmen $T_{CYC}$ besteht aus drei Arbeitsschritten. Erstens der Analyse, die von der Einrichtung 104 zum Analysieren durchgeführt wird, zweitens der Encodierung, welche von den Encodern 110-1 bis 110-N bewerkstelligt wird, und drittens der IP-Inserierung, welche von dem IP-Inserter 116 durchgeführt wird. Die aufeinanderfolgenden Gruppen von Bildern der Eingangssignale 102-1 bis 102-N können jeweils als voneinander unabhängig betrachtet werden, so dass die Bearbeitungsschritte zeitlich versetzt und parallel ausgeführt werden können. Ein zeitlicher Verarbeitungsverlauf ist in Fig. 2 schematisch dargestellt.

In einem ersten Bearbeitungsintervall 202 wird zunächst nur eine erste Gruppe von Bildern GoP1 analysiert. In einem zweiten Bearbeitungsintervall bzw. Zeitintervall 204 wird eine zweite Gruppe von Bildern GoP2 analysiert und gleichzeitig die erste Gruppe von Bildern GoP1 encodiert. In einem dritten Zeitintervall 206 wird zeitgleich eine dritte Gruppe von Bildern GoP3 analysiert, die zweite Gruppe von Bildern GoP2 encodiert und die erste Gruppe von Bildern GoP1 mittels des IP-Inserters 116 gesendet.

Eine GoP umfasst im Allgemeinen verschiedene Bildtypen (Intra und Inter). Zur Codierung mit gleicher Qualität werden für diese unterschiedliche Datenraten benötigt. Um eine gleich bleibende Qualität zu erreichen, verteilen die Encoder 110-n (n=1,...,N) daher die zugeteilte Gesamtdatenrate $B_R$ unterschiedlich zwischen den einzelnen Informationssignalen 102-1 bis 102-N. Die Datenrate $B_R$ ist nur als Mittel über die GoP anzusehen.

In Fig. 3 ist eine typische Zuteilung von (mittleren) Datenraten zu GOPs über die Zeit dargestellt.

P1 bis P5 bezeichnen dabei fünf parallel encodierte Informationssignale. In Fig. 3 ist zu erkennen, dass die Summe aller mittleren Datenraten $d_{R,n}$ (n=1,...,N, mit N=5) konstant bei $B_R$ liegt, d.h.

$$B_R = \sum_{n=1}^{N} d_{R,n} \cdot \qquad (2)$$

Gemäß Ausführungsbeispielen der vorliegenden Erfindung entspricht die Dauer der GoPs der encodierten Informationssignale P1 bis P5 der Dauer des Zeitrahmens $T_{CYC}$. Gemäß Ausführungsbeispielen werden den Encodern 110-n (n=1,...,N) von der Einrichtung 108 für den Zeitrahmen. $T_{cyc}$ jeweils Bitbudgets $N_{Bit,n}$ (n=1,...,N) vorgegeben, um die N Informationssignale 102-1 bis 102-N zu encodieren, wobei die Bitbudgets $N_{Bit,n}$ mit den mittleren zugeteilten Datenraten $d_{R,n}$ gemäß

$$N_{Bit,n} = d_{R,n} \cdot T_{CYC} \qquad (3)$$

zusammenhängen. Eine Zuteilung der Datenraten $d_{R,n}$ ist durch eine minimale und eine maximale Datenrate begrenzt. Die maximale Datenrate für ein Informationssignal 102-n (n=1,...,N) bestimmt sich aus der Begrenzung der unterstützten H.264/AVC Level. Ein H.264/AVC Level setzt Beschränkungen auf die Variablen eines Datenstroms, wie etwa die maximale Auflösung oder Bitrate. Die minimale Datenrate ist im System zu optimieren. Sie hängt beispielsweise von Inhalten der Informationssignale 102-1 bis 102-N oder Displayauflösungen von potentiellen Empfangsgeräten ab.

Der Daten-Inserter 116 übernimmt eine Umwandlung von den RTP/IP-Paketen 114-1 bis 114-N am Ausgang der Encoder 110-n (n=1,...,N) in einen DVB-konformen MPEG-2-Transportstrom 80 und die Erzeugung des bereits beschriebenen Time-Slicing. Dazu erhält der Daten-Inserter 116 von der Einrichtung 108 gemäß Ausführungsbeispielen Informationen über den Zeitrahmen $T_{CYC}$, um die zu dem Zeitrahmen gehörenden Datenpakete 114-n (n=1,...,N) zeitrichtig senden zu können.

Würde man ein herkömmliches Empfangsmodul für DVB-T in ein mobiles Endgerät einbauen, so würde ein erhöhter Stromverbrauch durch ein RF-Frontend Energieressourcen des mobilen Endgeräts schnell erschöpfen. Wie im Vorhergehenden bereits beschrieben wurde, wird bei DVB-H das Signal daher in aufeinanderfolgende Time-Slices bzw. Bursts 84-n (n=1,...,N) unterteilt. Jedem zu einem Burst 84-n zugehörigen Datenpaket 114-n wird eine FEC-Sektion zum Schutz gegen Übertragungsfehler angefügt, wie es eingangs bereits anhand von Fig. 9 beschrieben wurde. Für einen Empfang eines einzelnen Fernsehprogramms werden nur bestimmte Time-Slices benötigt. In der übrigen Zeit kann ein DVB-H-Empfangsmodul in einen Stromsparmodus versetzt werden. Wann das Modul wieder aktiviert werden muss, wird dem Empfänger mit Hilfe eines Parameters im Datenstrom mitgeteilt.

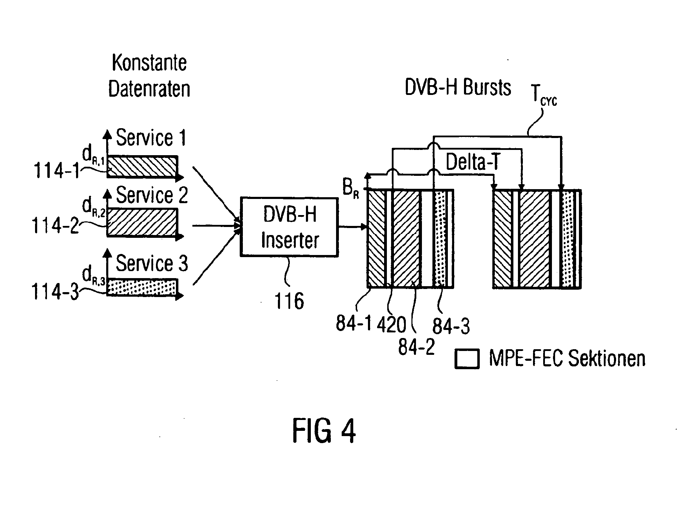

Der Daten-Inserter 116 bereitet die eingehenden RTP-Pakete 114-1 bis 114-N der N Services in N Bursts auf. Dieser Zusammenhang ist schematisch in Fig. 4 gezeigt.

Fig. 4 zeigt schematisch eine Reihe von RTP-Paketen 114-1, 114-2 und 114-3 eines ersten, eines zweiten und eines dritten Services, wobei die RTP-Pakete 114-1 bis 114-3 jeweils GoP's eines Zeitrahmens $T_{CYC}$ entsprechen. Die RTP-Pakete 114-1 bis 114-3 treffen jeweils mit mittleren konstanten Datenraten $d_{R,1}$ bis $d_{R,3}$ an dem Daten-Inserter 116 ein. Mittels eines vorhergehenden Analyseschrittes wurden für die Datenpakete 114-1 bis 114-3 vorher einzelne Bitbudgets $N_{Bit,1}$ bis $N_{Bit,3}$ bestimmt. Eine Datenmenge der ersten RTP-Pakete 114-1 für den Zeitrahmen $T_{CYC}$ entspricht also genau dem Bitbudget $N_{Bit,1}$. Entsprechendes gilt für die Datenpakete des zweiten und des dritten Services.

Der Daten-Inserter 116 bereitet nun die eingehenden RTP-Pakete 114-n in Bursts 84-n auf. Ein Burst 84-n ist dabei charakterisiert durch eine Burstdatenrate $B_R$, welche der Datenrate des DVB-konformen MPEG-2-Transportstroms $B_R$ entspricht, und eine Burstdauer $T_{B,n}$. Dabei nimmt der n-te Burst die Mediendaten des n-ten Services des Zeitrahmens $T_{cyc}$ auf. Wie im Vorhergehenden bereits beschrieben wurde, beinhaltet jeder Burst zusätzlich zu den Mediendaten eine entsprechende MPE-FEC-Sektion 420.

Die Energieersparnis an einem Empfänger bestimmt sich dabei aus dem Verhältnis $T_{CYC}/T_{B,n}$. Um die Bursts 84-n mit maximaler Effizienz in einen zugeordneten Kanal (Channel) einzufügen, während gleichzeitig regelmäßige Einschaltpunkte für einen Empfänger erzeugt werden und Energieersparnis ermöglicht wird, muss die mittlere Gesamtdatenrate $B_R$ aller Bursts 84-n (n = 1, ..., N) im Zeitraum $T_{CYC}$ konstant sein.

Betrachtet man nun die mittlere Gesamtdatenübertragungsrate $B_R$ aller eingehenden Videopakete 114-1 bis 114-N in einem beliebigen, zufällig gewählten Zeitintervall, so ist diese Schwankungen unterworfen. Durch die Verwendung eines Gesamtbudgets $N_{Bit,ges}$ an Bits für ein vorgegebenes Zeitintervall $T_{CYC}$, wobei

$$N_{Bit,ges} = \sum_{n=1}^{N} N_{Bit,n} \qquad (4)$$

kann die Paketgröße $N_{Bit,ges}$ am Sender exakt eingehalten werden, wenn dem Sender die Intervallgrenzen bekannt sind und diese zur Synchronisation des Time-Slicing verwendet werden. Zu diesem Zweck wird dem Daten-Inserter 116 gemäß Ausführungsbeispielen der vorliegenden Erfindung mitgeteilt, welche RTP-Pakete 114-n (n = 1, ..., N) zu welchem Zeitintervall gehören. Dadurch kann sichergestellt werden, dass die Servicedaten, wie z. B. GoPs, stets zum richtigen Zeitpunkt gesendet werden. Für eine Synchronisation der GoPs mit den Burst-Intervallen wird dem Daten-Inserter 116 die Anzahl N der Services und die zur Verfügung stehende Bitrate $B_R$ mitgeteilt. Gemäß Ausführungsbeispielen ist Daten-Inserter 116 bzw. die Einrichtung 116 zum Zuordnen also ausgebildet, um encodierte Datenpakete 114 der Informationssignale 102 basierend auf der Anzahl N von Informationssignalen 102 und der Übertragungsrate $B_R$ zuzuordnen.

Zusätzlich werden dem Daten-Inserter 116 gemäß Ausführungsbeispielen für jeden Service Zuordnungsinformationen übermittelt, wobei die Zuordnungsinformationen einen Zeitstempel eines zeitlich ersten Datenpakets pro Zeitrahmen und einen Zeitstempel eines zeitlich letzten Datenpakets pro Zeitrahmen aufweist. Dabei ist der Zeitstempel des zeitlich ersten Datenpakets pro Zeitrahmen gemäß Ausführungsbeispielen ein RTP-Zeitstempel des ersten Video-RTP-Pakets der jeweiligen GoPs und der Zeitstempel des zeitlich letzten Datenpakets pro Zeitrahmen ein RTP-Zeitstempel des letzten Video-RTP-Pakets der jeweiligen GoP's. Ferner weist die Zuordnungsinformation gemäß Ausführungsbeispielen eine Service-ID (MPEG-2-Transportstream-PID), über die der Service eindeutig identifizierbar ist und ein IP-Destination-Port, über den der Service identifizierbar ist, auf.

Die Einrichtung 116 zum Zuordnen ist also gemäß Ausführungsbeispielen ausgebildet, um ein encodiertes Datenpaket 114-n (n = 1, ..., N) eines Informationssignals 102-n (n = 1, ..., N) für den Zeitrahmen $T_{CYC}$ einem Zeitschlitz 84 basierend auf einem RTP-Zeitstempel eines ersten RTP-Datenpakets der Datenpakete pro Zeitrahmen und einem RTP-Zeitstempel eines letzten RTP-Datenpakets der Datenpakete pro Zeitrahmen zuzuordnen. Ferner ist die Einrichtung 116 zum Zuordnen ausgebildet, um ein encodiertes Datenpaket 114-n (n = 1, ..., N) eines Informationssignals 102-n (n = 1, ..., N) für den Zeitrahmen $T_{CYC}$ einem Zeitschlitz 84 basierend auf einem das Informationssignal 102 identifizierendem Signal zuzuordnen. Die Einrichtung 116 zum Zuordnen ist ferner ausgebildet, um ein encodiertes Datenpaket 114-n (n = 1, ..., N) eines Informationssignals 102-n (n = 1, ..., N) für den Zeitrahmen $T_{CYC}$ einem Zeitschlitz 84-n (n = 1, ..., N) basierend auf einem IP-Destination-Port zuzuordnen.

Die Datenpakete können mittels TCP/IP (TCP = Transmission Control Protocol) oder UDP/IP (UDP = User Datagram Protocol) übertragen werden. TCP/IP ermöglicht dabei eine sichere Übertragung. Bei UDP/IP kann via Multicast an mehrere IP-Ziele gleichzeitig gesendet werden.

Durch eine Kommunikation zwischen einer Master-Einheit 108 des statistischen Multiplexers und dem Daten-Inserter 116 ergeben sich mehrere Vorteile. Die vorgegebene Gesamtbitrate $B_R$ wird durch den Daten-Inserter 116 eingehalten, da eine Burst-Wahl entsprechend den mitgeteilten Parametern erfolgen kann. Aufgrund der RTP-Zeitstempel für jeden Service kann der Daten-Inserter 116 feststellen, wann die Daten für eine GoP aus einem Puffer ausgelesen wurden und der zu dem Service gehörende Burst vollständig mit Daten aufgefüllt ist. Daraufhin kann der zu dem nächsten Service gehörende Burst mit Daten gefüllt werden.

Des Weiteren kann eine zeitliche Verzögerung der Übertragung von Sender zu Empfänger auf einen Burst bzw. eine GoP reduziert werden. Wenn die Encodierung einer aktuellen ersten GoP beendet ist, ist die Analyse der folgenden zweiten GoP bereits abgeschlossen und die zugeteilte Datenraten bzw. das zugeteilte Bitbudget $N_{bit,n}$ (n=1,..., N) bekannt. Auch die Daten der zweiten GoP werden über das Synchronisationsprotokoll rechtzeitig an den Daten-Inserter 116 übermittelt. Eine aktuelle GoP kann damit aufbereitet werden, ohne auf die codierten Daten einer folgenden GoP warten zu müssen.

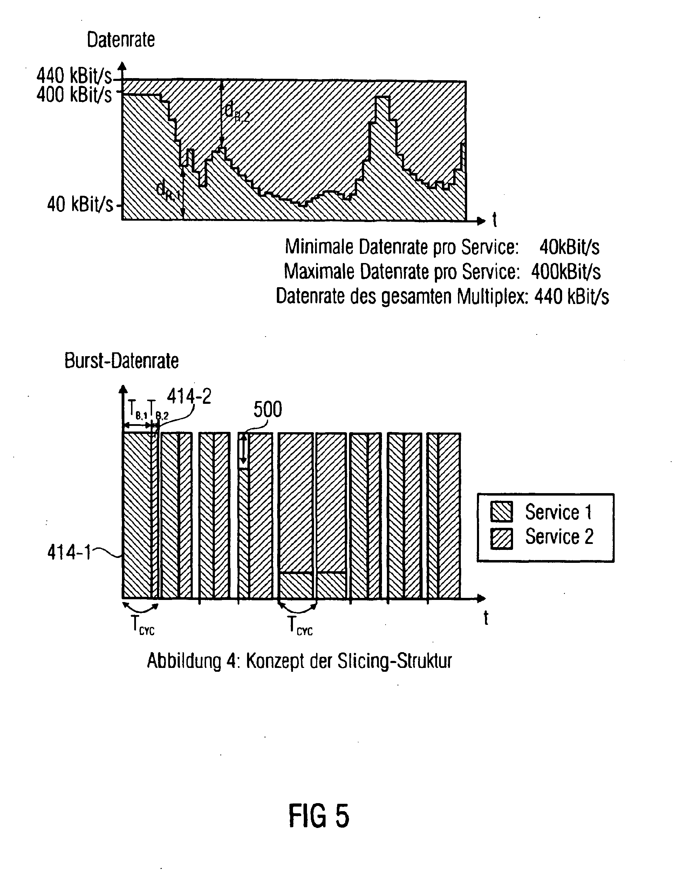

Im Allgemeinen wird jeder Service des statistischen Multiplexes in einem eigenen Burst übertragen. Die Bursts benutzten als Burstdatenrate die Datenrate $B_R$ des Kanals, um diesen optimal zu füllen. Datenratenschwankungen werden über die jeweilige Burstdauer $T_{B,n}$ (n=1,...,N) ausgeglichen. Um den Fehlerschutz der Übertragung zu gewährleisten, ist es jedoch notwendig, eine minimale Burstdauer $T_{B,min}$ nicht zu unterschreiten. Würde diese durch das oben beschriebene erfindungsgemäße Konzept unterschritten, wird gemäß Ausführungsbeispielen ein niederratiger Service mit einem anderen Service kombiniert übertragen. Dazu werden die Datenraten der betroffenen Services so reduziert, dass beide Services über die gesamte Burstdauer parallel übertragen werden können. Dieses Burstschema ist exemplarisch in Fig. 5 gezeigt.

Fig. 5 zeigt einen Multiplexbetrieb von zwei Services, wobei in dem in Fig. 5 gezeigten Beispiel eine Summendatenrate der beiden Services 440 kBit/s beträgt. Eine minimale Datenrate pro Service beträgt in dem gezeigten Beispiel 40 kBit/s, eine maximale Datenrate pro Service 400 kBit/s.

Im oberen Teil von Fig. 5 lässt sich erkennen, dass zu Beginn der Übertragung die Datenrate $d_{R,1}$ des ersten Services 400 kBit/s beträgt, wohingegen die Datenrate $d_{R,2}$ des zweiten Services lediglich 40 kBit/s beträgt. Dementsprechend ergibt sich im unteren Teil von Fig. 5 zu Beginn der Übertragung eine größere Burstdauer $T_{B,1}$ des ersten Services verglichen mit der Burstdauer $T_{B,2}$ des zweiten Services. Mit zunehmender Zeit sinkt die Datenrate $d_{R,1}$ des ersten Services, wohingegen die Datenrate $d_{R,2}$ des zweiten Services mit zunehmender Zeit wächst. Dieses Verhalten lässt sich im unteren Teil von Fig. 5 an den entsprechenden Burstdauern $T_{B,1}$ und $T_{B,2}$ ablesen. Die Burstdauer $T_{B,1}$

des ersten Services wird mit abnehmender Datenrate kleiner, wohingegen die Burstdauer $T_{B,2}$ aufgrund der zunehmenden Datenrate des zweiten Services immer größer wird. Zum Zeitpunkt 500 ist die mittlere Datenrate des ersten Services so gering, dass eine minimale Burstdauer $T_{B,min}$ unterschritten werden müsste, um die Datenpakete des ersten Services mit der Burstdatenrate $B_R$ zu senden. Um die minimale Burstdauer $T_{B,min}$ nicht zu unterschreiten, werden in den nachfolgenden beiden Zeitrahmen der Dauer $T_{CYC}$ die Bursts des ersten und des zweiten Service zusammengefasst. Sobald die mittleren Datenraten $d_{R,1}$, $d_{R,2}$ des ersten und des zweiten Services wieder ausreichend sind, um die minimale Burstdauer $T_{B,min}$ zu überschreiten, werden die Bursts wieder im herkömmlichen Time-Slicing Schema versandt.

Gemäß einem Ausführungsbeispiel der vorliegenden Erfindung ist die Einrichtung (116) zum Zuordnen also ausgebildet, um ein Unterschreiten einer minimalen Burstdauer $T_{B,min}$ eines einem ersten Informationssignal zuordenbaren Bursts durch eine zusätzliche Zuordnung eines zweiten Informationssignals zu dem Burst zu verhindern.

Sobald mehr als zwei Services im Multiplex betrieben werden, ergibt sich für den in Fig. 5 veranschaulichten Kombinationsfall die Auswahl der Services als Optimierungsproblem. Gemäß Ausführungsbeispielen der vorliegenden Erfindung können beispielsweise zwei aufeinander folgende Services miteinander kombiniert werden. Im einfachsten Fall ist dabei eine Kombination von Services höchster und geringster Datenrate mit stark verminderten Ausschaltzeiten an einem Empfänger und damit höherem Energieverbrauch möglich.

Des Weiteren können, gemäß Ausführungsbeispielen, auch Services mit geringen Datenraten zusammengefasst werden. Allerdings kann ein Vertauschen der Servicereihenfolge zusätzliche Anforderungen an eine Pufferung in dem Daten-Inserter 116 stellen.

Das erfindungsgemäße Konzept arbeitet auch mit Gruppen von Subkanälen und Subkanälen innerhalb eines Kanals. Dabei können den Gruppen von Subkanälen oder den Subkanälen verschiedene Dienstanbieter zugeordnet sein, die sich einen Transportstrom für ihre jeweiligen Informationssignale teilen. Mittels Subkanälen können die Dienste von verschiedenen Anbietern getrennt werden. Dazu wird der Transportstrom in logische Subkänale mit jeweils verschiedenen Time-Slicing Charakteristika unterteilt, wobei bei jedem dieser Subkänale das erfindungsgemäße Konzept Anwendung finden kann.

Eine Einheit eines statistischen Multiplex mit Daten-Inserter 116 besteht gemäß Ausführungsbeispielen aus mehreren Encodern 110-1 bis 110-N und einem oder mehreren Daten-Insertern 116, welche zusammen den Inhalt eines Subkanals bilden.

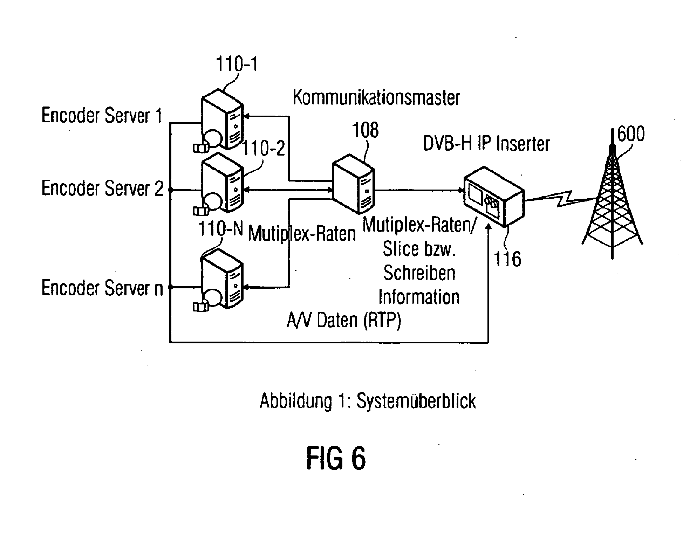

Ein zusammenfassender, grober Überblick über ein erfindungsgemäßes System zum statistischen Multiplex ist in Fig. 6 gezeigt.

Fig. 6 zeigt eine Mehrzahl von Encodern 110-1 bis 110-N, welche mit einer Einrichtung 108 zum Einstellen einer Komprimierungsrate für jedes der Mehrzahl von Informationssignalen bzw. einem Kommunikationsmaster gekoppelt sind. Die Encoder 110-1 bis 110-N sind weiterhin mit einem DVB-H-Daten-Inserter 116 gekoppelt, der über ein Synchronisationsprotokoll mit dem Kommunikationsmaster 108 gekoppelt ist. Das von dem Daten-Inserter 116 gebildete Ausgangssignal bzw. der Datenstrom wird über einen Sender 600 zu Rundfunkempfängern, insbesondere mobilen Rundfunkempfängern abgestrahlt. In dem in Fig. 6 gezeigten Ausführungsbeispiel sind die Analyseeinheiten 104-1 bis 104-N in den Encodern 110-1 bis 110-N enthalten, da zur Analyse bestimmte Encodierschritte benötigt werden. Die in Fig. 6 gezeigten Komponenten wurden im Vorhergehenden anhand der Fig. 1 bis 5 bereits eingehend erläutert. Daher soll an dieser Stelle auf eine weitere Beschreibung verzichtet werden.

Zusammenfassend soll noch einmal darauf hingewiesen werden, dass bei dem erfindungsgemäßen Konzept ein statistischer Multiplexer die Option hat, die Bandbreite seiner Eingangssignale bzw. Informationssignale 102-1 bis 102-N, durch Steuerung der angeschlossenen Encoder 110-1 bis 110-N, bereits bei deren Generierung zu begrenzen (Rückkopplung). Ist diese Rückkopplung vorhanden, so werden durch den statistischen Multiplex bei einer Übertragung keine Eingangspakete verloren und der Durchsatz kann 100% betragen. Bei einem herkömmlichen, nicht rückgekoppelten System hingegen hat der statistische Multiplex lediglich die Option Eingangspakete zu verwerfen oder abzuschneiden, wobei beide Optionen Qualitätseinbußen für die offenen decodierten Signale nach sich ziehen, die unter Umständen erheblich sind.

Die Begrenzung der Bandbreite wird durch eine Einführung eines Budgets $N_{bit,ges}$ an übertragbaren Bits für ein gegebenes Zeitintervall $T_{CYC}$, das dem Zeitrahmen entspricht, erreicht. Das Budget $N_{bit,ges}$ an übertragbaren Bits tritt also an die Stelle der mittleren Gesamtdatenübertragungsrate $B_R$. Somit kann sichergestellt werden, dass exakt das Budget $N_{bit,ges}$ an übertragbaren Bits pro Zeitrahmen $T_{CYC}$ übertragen wird und keine Daten aufgrund von Schwankungen der mittleren Gesamtdatenübertragungsrate verworfen werden müssen.

Insbesondere wird darauf hingewiesen, dass abhängig von den Gegebenheiten das erfindungsgemäße Schema auch in Software implementiert sein kann. Die Implementierung kann auf einem digitalen Speichermedium, insbesondere einer Diskette oder einer CD mit elektronisch auslesbaren Steuersignalen erfolgen, die so mit einem programmierbaren Computersystem und/oder Mikrocontroller zusammenwirken können, dass das entsprechende Verfahren zum Encodieren einer Mehrzahl von Informationssignalen ausgeführt wird. Allgemein besteht die Erfindung somit auch in einem Computerprogrammprodukt mit einem auf einem maschinenlesbaren Träger gespeicherten Programmcode zur Durchführung des erfindungsgemäßen Verfahrens, wenn das Computerprogrammprodukt auf einem Rechner und/oder Mikrocontroller abläuft. In anderen Worten ausgedrückt, kann die Erfindung somit als ein Computerprogramm mit einem Programmcode zur Durchführung des Verfahrens zum Encodieren einer Mehrzahl von Informationssignalen für eine gemeinsame Übertragung in einem Zeitmultiplex realisiert werden, wenn das Computerprogramm auf einem Computer und/oder Mikrocontroller abläuft.

**Patentansprüche**

1. Vorrichtung (100) zum Encodieren einer Mehrzahl von Videosignalen (102) für eine gemeinsame Übertragung in einem Zeitmultiplex in einem Zeitrahmen ($T_{CYC}$) und mit einer Übertragungsrate ($B_R$), mit
   einer Einrichtung (108) zum Einstellen einer Komprimierungsrate ($d_{R,n}$) für jedes Videosignal (102) zur Minderung einer Gesamtqualitätsstörung pro Zeitrahmen ($T_{CYC}$), so dass pro Zeitrahmen ($T_{CYC}$) eine aus dem Zeitrahmen und der Übertragungsrate ($B_R$) vorgegebene Übertragungsmenge (D) nicht überschritten wird;
   einem Encoder (110) pro Videosignal, um einen Videosignalabschnitt des Videosignals mit der eingestellten Komprimierungsrate ($d_{R,n}$) zu encodieren, derart, dass Zeitrahmengrenzen auf Videosignalabschnittsgrenzen fallen, so dass der Videosignalabschnitt eine Dauer entsprechend dem Zeitrahmen ($T_{CYC}$) der gemeinsamen Übertragung aufweist;
   einer Einrichtung zum Bereitstellen einer Zuordnungsinformation, basierend auf welcher die encodierten Datenpakete (114) dem Zeitrahmen ($T_{CYC}$) zuordenbar sind, wobei die Zuordnungsinformation einen Zeitstempel eines zeitlich ersten encodierten Datenpakets des Zeitrahmens ($T_{CYC}$) und einen Zeitstempel eines zeitlich letzten encodierten Datenpakets des Zeitrahmens ($T_{CYC}$) aufweist; und
   einer Einrichtung (116) zum Zuordnen, die ausgebildet ist, um, basierend auf der Zuordnungsinformation, die dem Zeitrahmen ($T_{CYC}$) zuordenbaren encodierten Datenpakete (114) eines Videosignals einem dem Zeitrahmen ($T_{CYC}$) zuordenbaren Zeitschlitz (84) zuzuordnen.

2. Vorrichtung gemäß Anspruch 1, bei der die Einrichtung (108) zum Einstellen ausgebildet ist, um die Komprimierungsrate derart einzustellen, dass pro Zeitrahmen ($T_{CYC}$) eine aus den eingestellten Komprimierungsraten resultierende Übertragungsmenge genau der aus dem Zeitrahmen ($T_{CYC}$) und der Übertragungsrate ($B_R$) vorgegebene Übertragungsmenge (D) entspricht.

3. Vorrichtung gemäß Anspruch 1, bei der die Zeitstempel RTP-Zeitstempel sind.

4. Vorrichtung gemäß einem der vorhergehenden Ansprüche, bei der die Einrichtung (116) zum Zuordnen ferner ausgebildet ist, um ein Unterschreiten einer minimalen Zeitschlitzdauer ($T_{B,min}$) eines einem ersten Videosignal zuordenbaren Zeitschlitz durch eine zusätzliche Zuordnung eines zweiten Videosignals zu dem Zeitschlitz zu verhindern.

5. Vorrichtung gemäß einem der vorhergehenden Ansprüche, wobei die Vorrichtung ferner eine Einrichtung (104) zum Analysieren der Mehrzahl der Videosignale (102) pro Zeitrahmen ($T_{CYC}$) aufweist, um, basierend auf der Analyse, eine Kompressionsrate ($d_{R,n}$) für jedes Videosignal derart einstellen zu können, dass pro Zeitrahmen ($T_{CYC}$) eine aus dem Zeitrahmen und der Übertragungsrate ($B_R$) vorgegebene Übertragungsmenge (D) nicht überschritten wird.

6. Verfahren zum Encodieren einer Mehrzahl von Videosignalen (102) für eine gemeinsame Übertragung in einem Zeitmultiplex in einem Zeitrahmen ($T_{CYC}$) und mit einer Übertragungsrate ($B_R$), mit folgenden Schritt:

   Einstellen einer Komprimierungsrate ($d_{R,n}$) für jedes Videosignal (102) zur Minderung einer Gesamtqualitätsstörung pro Zeitrahmen ($T_{CYC}$), so dass pro Zeitrahmen eine aus dem Zeitrahmen und der Übertragungsrate ($B_R$) vorgegebene Übertragungsmenge (D) nicht überschritten wird.
   Encodieren eines Videosignalabschnitts eines Videosignals der Mehrzahl von Videosignalen (102) mit der eingestellten Komprimierungsrate ($d_{R,n}$), derart, dass Zeitrahmengrenzen auf Videosignalabschnittsgrenzen fallen, so dass der Videosignalabschnitt eine Dauer entsprechend dem Zeitrahmen ($T_{CYC}$) der gemeinsamen Übertragung aufweist.
   Bereitstellen einer Zuordnungsinformation, basierend auf welcher die encodierten Datenpakete (114) dem Zeitrahmen ($T_{CYC}$) zuordenbar sind, wobei die Zuordnungsinformation einen Zeitstempel eines zeitlich ersten encodierten Datenpakets des Zeitrahmens ($T_{CYC}$) und einen Zeitstempel eines zeitlich letzten encodierten Datenpakets des Zeitrahmens ($T_{CYC}$) aufweist; und
   Zuordnen, basierend auf der Zuordnungsinformation, der dem Zeitrahmen ($T_{CYC}$) zuordenbaren encodierten Datenpakete (114) eines Videosignals zu einem dem Zeitrahmen ($T_{CYC}$) zuordenbaren Zeitschlitz (84).

7. Computer-Programm mit einem Programmcode zur Durchführung des Verfahrens zum Encodieren einer Mehrzahl von Videosignalen gemäß Anspruch 6, wenn das Computer-Programm auf einem Computer oder Mikrocontroller abläuft.

**Claims**

1. Device (100) for encoding a plurality of video signals (102) for shared transmission in time-division multiplexing within a time frame ($T_{CYC}$) and at a transmission rate ($B_R$), comprising
means (108) for setting a compression rate ($d_{R,n}$) for each video signal (102) for reducing an overall quality disturbance per time frame ($T_{CYC}$), so that per time frame ($T_{CYC}$), a transmission amount (D) specified by the time frame and the transmission rate ($B_R$) is not exceeded;
an encoder (110) per video signal so as to encode a video signal portion of the video signal at the compression rate ($d_{R,n}$) set, such that time frame boundaries coincide with video signal portion boundaries, so that the video signal portion has a duration which corresponds to the time frame ($T_{CYC}$) of the shared transmission;
means for providing association information on the basis of which the encoded data packets (114) may be associated with the time frame ($T_{CYC}$), said association information comprising a time stamp of a chronologically first encoded data packet of the time frame ($T_{CYC}$), and a time stamp of a chronologically last encoded data packet of the time frame ($T_{CYC}$); and
means (116) for associating which is configured to associate, on the basis of the association information, those encoded data packets (114) of a video signal which may be associated with the time frame ($T_{CYC}$) with a time slot (84) that may be associated with the time frame ($T_{CYC}$).

2. Device as claimed in claim 1, wherein the means (108) for setting is configured to set the compression rate such that per time frame ($T_{CYC}$), a transmission amount resulting from the compression rates set precisely corresponds to the transmission amount (D) specified by the time frame ($T_{CYC}$) and the transmission rate ($B_R$).

3. Device as claimed in claim 1, wherein the time stamps are RTP time stamps.

4. Device as claimed in any of the previous claims, wherein the means (116) for associating is further configured to prevent a minimum time slot duration ($T_{B,min}$) of a time slot that may be associated with a first video signal from being fallen below by an additional association of a second video signal with the time slot.

5. Device as claimed in any of the previous claims, wherein the device further comprises means (104) for analyzing the plurality of video signals (102) per time frame ($T_{CYC}$) so as to be able to set, on the basis of the analysis, a compression rate ($d_{R,n}$) for each video signal such that per time frame ($T_{CYC}$), a transmission amount (D) specified by the time frame and the transmission rate ($B_R$) is not exceeded.

6. Method of encoding a plurality of video signals (102) for shared transmission in time-division multiplexing within a time frame ($T_{CYC}$) and at a transmission rate ($B_R$), comprising:

   setting a compression rate ($d_{R,n}$) for each video signal (102) for reducing an overall quality disturbance per time frame ($T_{CYC}$), so that per time frame, a transmission amount (D) specified by the time frame and the transmission rate ($B_R$) is not exceeded.
   Encoding a video signal portion of a video signal of the plurality of video signals (102) at the compression rate ($d_{R,n}$) set, such that time frame boundaries coincide with video signal portion boundaries, so that the video signal portion has a duration which corresponds to the time frame ($T_{CYC}$) of the shared transmission.
   Providing association information on the basis of which the encoded data packets (114) may be associated with the time frame ($T_{CYC}$), said association information comprising a time stamp of a chronologically first encoded data packet of the time frame ($T_{CYC}$), and a time stamp of a chronologically last encoded data packet of the time frame ($T_{CYC}$); and
   associating, on the basis of the association information, those encoded data packets (114) of a video signal which may be associated with the time frame ($T_{CYC}$) with a time slot (84) that may be associated with the time frame ($T_{CYC}$).

7. Computer program comprising a program code for performing the method of encoding a plurality of video signals as claimed in claim 6, when the computer program runs on a computer or microcontroller.

**Revendications**

1. Dispositif (100) de codage d'une pluralité de signaux vidéo (102) pour une transmission commune dans un multiplexage à répartition dans le temps ($T_{CYC}$) et à une vitesse de transmission ($B_R$), avec

   un moyen (108) destiné à régler un taux de compression ($d_{R,n}$) pour chaque signal vidéo (102) en vue de réduire une dégradation de qualité d'ensemble par trame ($T_{CYC}$), de sorte que, par trame ($T_{CYC}$), une quantité de transmission (D) prédéterminée à partir de la trame et de la vitesse de transmission ($B_R$) ne soit pas excédée;

   un codeur (110) par signal vidéo, pour coder un segment du signal vidéo avec le taux de compression ($d_{R,n}$) réglé, de sorte que les limites de la trame coïncident avec les limites de segment du signal vidéo, de sorte que le segment du signal vidéo présente une durée correspondant à la trame ($T_{CYC}$) de la transmission commune;

   un moyen destiné à mettre à disposition une information d'association sur base de laquelle les paquets de données codées (114) peuvent être associés à la trame ($T_{CYC}$), l'information d'association présentant une estampille d'un premier paquet de données codées dans le temps de la trame ($T_{CYC}$) et une estampille d'un dernier paquet de données codées dans le temps de la trame ($T_{CYC}$); et

   un moyen (116) destiné à associer réalisé de manière à associer, sur base de l'information d'association, les paquets de données codées (114) d'un signal vidéo pouvant être associés à la trame ($T_{CYC}$) à un intervalle de temps (84) pouvant être associé à la trame.

2. Dispositif selon la revendication 1, dans lequel le moyen (108) destiné à régler est réalisé de manière à régler le taux de compression de sorte que, par trame ($T_{CYC}$), une quantité résultant des taux de compression réglés corresponde exactement à la quantité de transmission (D) prédéterminée à partir de la trame ($T_{CYC}$) et de la vitesse de transmission ($B_R$).

3. Dispositif selon la revendication 1, dans lequel les estampilles sont des estampilles RTP.

4. Dispositif selon l'une des revendications précédentes, dans lequel le moyen (116) destiné à associer est par ailleurs réalisé de manière à empêcher de descendre au-dessous d'une durée d'intervalle de temps minimale ($T_{B,min}$) d'un intervalle de temps pouvant être associé à un premier signal vidéo par une association additionnelle d'un deuxième signal vidéo à l'intervalle de temps.

5. Dispositif selon l'une des revendications précédentes, dans lequel le dispositif présente par ailleurs un moyen (104) destiné à analyser la pluralité de signaux vidéo (102) par trame ($T_{CYC}$), pour pouvoir régler, sur base de l'analyse, un taux de compression ($d_{R,n}$) pour chaque signal vidéo de sorte que, par trame ($T_{CYC}$), une quantité de transmission (D) prédéterminée à partir de la trame et de la vitesse de transmission ($B_R$) ne soit pas excédée.

6. Procédé de codage d'une pluralité de signaux vidéo (102) pour une transmission commune dans un multiplexage à répartition dans le temps ($T_{CYC}$) et à une vitesse de transmission ($B_R$), aux étapes suivantes consistant à:

   régler un taux de compression ($d_{R,n}$) pour chaque signal vidéo (102) en vue de réduire une dégradation de qualité d'ensemble par trame ($T_{CYC}$), de sorte que, par trame, une quantité de transmission (D) prédéterminée à partir de la trame et de la vitesse de transmission ($B_R$) ne soit pas excédée;

   coder un segment du signal vidéo de la pluralité de signaux vidéo (102) avec le taux de compression ($d_{R,n}$) réglé, de sorte que les limites de la trame coïncident avec les limites de segment du signal vidéo, de sorte que le segment du signal vidéo présente une durée correspondant à la trame ($T_{CYC}$) de la transmission commune;

   mettre à disposition une information d'association sur base de laquelle les paquets de données codées (114) peuvent être associés à la trame ($T_{CYC}$), l'information d'association présentant une estampille d'un premier paquet de données codées dans le temps de la trame ($T_{CYC}$) et une estampille d'un dernier paquet de données codées dans le temps de la trame ($T_{CYC}$); et

   associer, sur base de l'information d'association, les paquets de données codées (114) d'un signal vidéo pouvant être associés à la trame ($T_{CYC}$) à un intervalle de temps (84) pouvant être associé à la trame.

7. Programme d'ordinateur avec un code de programme pour réaliser le procédé de codage d'une pluralité de signaux vidéo selon la revendication 6 lorsque le programme d'ordinateur est exécuté sur un ordinateur ou un microcontrôleur.

FIG 1

202    204    206

Analyse
Encodiereung
IP-Einfügung

| | GOP1 | GOP2 | GOP3 | | |
|---|---|---|---|---|---|
| | | GOP1 | GOP2 | GOP3 | |
| | | | GOP1 | GOP2 | GOP3 |

Zeit

Abbildung 2: GOP Struktur

## FIG 2

$B_R$

Bitrate

$T_{CYC}$          Zeit          $T_{CYC}$          t

Abbildung 3: Bitratenzuteilung auf GOPs

## FIG 3

Konstante
Datenraten

DVB-H Bursts $T_{CYC}$

Service 1

$d_{R.1}$

114-1

Service 2

$d_{R.2}$

114-2

Service 3

$d_{R.3}$

114-3

DVB-H
Inserter

116

$B_R$

Delta-T

84-1 420 84-3

84-2

☐ MPE-FEC Sektionen

FIG 4

Datenrate

440 kBit/s
400 kBit/s

$d_{B,2}$

$d_{R,1}$

40 kBit/s

t

Minimale Datenrate pro Service:    40kBit/s
Maximale Datenrate pro Service:  400kBit/s
Datenrate des gesamten Multiplex: 440 kBit/s

Burst-Datenrate

$T_{B,1}$ $T_{B,2}$  414-2      500

414-1

┌─────────────────┐
│ ▨  Service 1    │
│ ▧  Service 2    │
└─────────────────┘

$T_{CYC}$          $T_{CYC}$         t

Abbildung 4: Konzept der Slicing-Struktur

# FIG 5

Abbildung 1: Systemüberblick

# FIG 6

FIG. 7

FIG 8

FIG 9